# EUROPEAN PATENT APPLICATION

(11) **EP 4 641 309 A2**
(43) Date of publication of application: **29.10.2025**
(21) Application number: 25165279.8
(22) Date of filing: 21.03.2025
(51) Int. Cl.: G03G 15/04, G03G 15/32

(54) **EXPOSURE HEAD AND IMAGE FORMING APPARATUS**

(30) Priority: 26.04.2024 JP 2024072432
(71) Applicant: CANON KABUSHIKI KAISHA, Tokyo 146-8501 (JP)
(72) Inventor: YAMADA, Akihisa, Tokyo, 146-8501 (JP); SAKURAI, Yuuta, Tokyo, 146-8501 (JP); OGURO, Yu, Tokyo, 146-8501 (JP); TAKANO, Hiroki, Tokyo, 146-8501 (JP); NAKAHATA, Hiroshi, Tokyo, 146-8501 (JP); ISHIDATE, Takehiro, Tokyo, 146-8501 (JP)
(74) Representative: TBK

(57) **Abstract**

EXPOSURE HEAD AND IMAGE FORMING APPARATUS

There is provided an exposure head (100) including: a holder (120); a substrate (110) on which a plurality of light-emitting elements (111) is mounted along a rotational axis direction of the image bearing member (2Y,2M,2C,2K); a lens array (101) including a plurality of lenses (1011) configured to transmit light emitted from the plurality of light-emitting elements (111) and condense the light on the image bearing member (2Y,2M,2C,2K); and an adhesive (102) fixing the substrate (110) and the lens array (101) to the holder (120) in a state in which the plurality of light-emitting elements (111) and the lenses (1011) face each other and in a state in which the substrate (110) and the holder (120) are separated from each other. The substrate (110) includes a first facing portion (110a) facing the holder (120) with a first gap (g2) therebetween in a lateral direction of the substrate (110), and a second facing portion (116) facing the holder (120) with a second gap (g1) therebetween which is larger than the first gap (g2) in the lateral direction, and the adhesive (102) fixes the substrate (110) and the holder (120) via the second facing portion (116).

## Description

### BACKGROUND OF THE INVENTION

### Field of the Invention

The present invention relates to an exposure head that exposes an image bearing member and an electrophotographic-system image forming apparatus such as a digital copying machine or a facsimile machine having the exposure head.

### Description of the Related Art

Conventionally, electrophotographic-system image forming apparatuses such as laser beam printers or digital copying machines have an LED exposure head as one unit that exposes a photoreceptor. The LED exposure head is an exposure device including optical systems such as an LED and a lens array provided close to a surface of an image bearing member and arranged in an axial direction of the image bearing member.

Conventionally, in such an LED exposure head, there is a possibility that relative positions of the LED and the lens array and the image bearing member in a direction orthogonal to the axial direction of the image bearing member will change due to heat generated by a driver IC or the like, and a light quantity as an output will change. On the other hand, Japanese Patent Laid-Open No. 2021-074943 discloses a configuration in which a heat dissipation member is in contact with a driver IC and a holder in order to reduce a temperature rise of the driver IC which is a heat source. According to Japanese Patent Laid-Open No. 2021-074943, the temperature rise of the driver IC can be reduced by dissipating heat generated in the driver IC to the metallic holder via the heat dissipation member.

However, in Japanese Patent Laid-Open No. 2021-074943, it is difficult to prevent a temperature rise of the heat source, and a problem arises in that that fluctuations in an optical output such as a light quantity due to the temperature rise of the heat source cannot be sufficiently reduced.

### SUMMARY OF THE INVENTION

It is desirable to provide an exposure head and an image forming apparatus capable of reducing fluctuations in an optical output due to a temperature rise with a simple configuration.

There is provided an exposure head according to the invention configured to expose a rotating image bearing member, the exposure head including: a holder; a substrate on which a plurality of light-emitting elements is mounted along a rotational axis direction of the image bearing member; a lens array including a plurality of lenses configured to transmit light emitted from the plurality of light-emitting elements and condense the light on the image bearing member; and an adhesive fixing the substrate and the lens array to the holder in a state in which the plurality of light-emitting elements and the lenses face each other and in a state in which the substrate and the holder are separated from each other. The substrate includes a first facing portion facing the holder with a first gap therebetween in a lateral direction of the substrate, and a second facing portion facing the holder with a second gap therebetween which larger than the first gap in the lateral direction, and the adhesive fixes the substrate and the holder via the second facing portion.

Further features of the present invention will become apparent from the following description of exemplary embodiments with reference to the attached drawings.

### BRIEF DESCRIPTION OF THE DRAWINGS

FIG. 1 is a schematic view of an image forming apparatus according to Embodiment 1 of the invention;
FIG. 2 is a perspective view of an exposure head from a lens array side according to Embodiment 1 of the invention;
FIG. 3 is a perspective view of the exposure head from a substrate side according to Embodiment 1 of the invention;
FIG. 4 is a cross-sectional view taken along line A-A in FIG. 3;
FIGS. 5A, 5B, 5C, 5D, and 5E are perspective views illustrating a configuration of a component mounted on a substrate of the exposure head and lenses of a lens array according to Embodiment 1 of the invention;
FIG. 6 is a perspective view of the substrate of the exposure head according to Embodiment 1 of the invention;
FIG. 7 is an enlarged view of a part of the exposure head according to Embodiment 1 of the invention;
FIGS. 8A and 8B are schematic views of states before and after a temperature rise of an adhesive of the exposure head according to Embodiment 1 of the invention;
FIGS. 9A, 9B, and 9C are a table and graphs illustrating a result of a simulation of the exposure head according to Embodiment 1 of the invention; and
FIGS. 10A and 10B are cross-sectional views of an exposure head according to Embodiment 2 of the invention.

### DESCRIPTION OF THE EMBODIMENTS

Hereinafter, embodiments will be described in detail with reference to the drawings.

### <Configuration of Image Forming Apparatus>

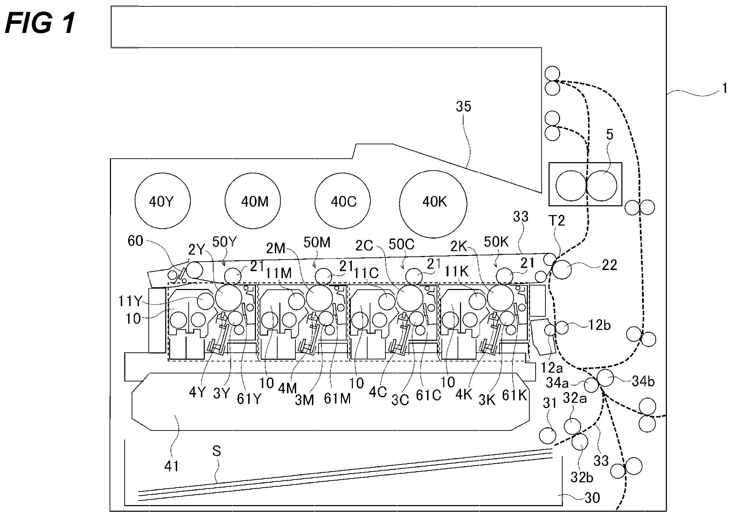

A configuration of an image forming apparatus 1 according to Embodiment 1 of the invention will be described in detail with reference to FIG. 1.

Here, an example of the image forming apparatus 1 is a so-called tandem-type color multi function peripheral (MFP) including a reader and a plurality of photoconductor drums 2Y, 2M, 2C, and 2K. The image forming apparatus 1 may be a copying machine without including a reader, a color image forming apparatus including one photoconductor drum, or an image forming apparatus that forms a monochrome image.

Specifically, the image forming apparatus 1 includes a fuser 5, a development unit 10, a registration roller 12a, a registration roller 12b, an intermediate transfer belt 20, a primary transfer roller 21, a secondary transfer roller 22, a sheet feeding portion 30, and a sheet feeding roller 31. Also, the image forming apparatus 1 includes a sheet separating conveying roller 32a, a sheet separating conveying roller 32b, a conveying roller 34a, a conveying roller 34b, a sheet discharge portion 35, toner containers 40Y, 40M, 40C, and 40K, and a collected toner container 41. Further, the image forming apparatus 1 includes image forming portions 50Y, 50M, 50C, and 50K, and a belt cleaning device 60.

The fuser 5 fuses a toner image to a recording material S by applying heat and pressure to the toner image secondarily transferred onto the recording material S by the secondary transfer roller 22. The fuser 5 conveys, toward the sheet discharge portion 35, the recording material S on which the toner image has been fused.

The development unit 10 accommodates toner.

The registration roller 12a and the registration roller 12b constitute a pair of registration rollers, and temporarily stop the conveyance of the recording material S conveyed by the conveying roller 34a and the conveying roller 34b via a conveying path 33, and perform skew feeding correction and timing correction of the recording material S. The registration roller 12a and the registration roller 12b convey the recording material S subjected to the skew feeding correction and the timing correction to a secondary transfer portion T2.

On the intermediate transfer belt 20, toner images formed on the photoconductor drums 2Y, 2M, 2C, and 2K, which will be described below, of the image forming portions 50Y, 50M, 50C, and 50K are sequentially subjected to primary transfer by the primary transfer roller 21.

The primary transfer roller 21 sequentially performs the primary transfer of the toner images formed on the photoconductor drums 2Y, 2M, 2C, and 2K onto the intermediate transfer belt 20.

The secondary transfer roller 22 forms the secondary transfer portion T2 by causing an outer secondary transfer roller and an inner secondary transfer roller to be pressed against each other via the intermediate transfer belt 20. When a transfer bias is applied, the secondary transfer roller 22 performs, at the secondary transfer portion T2, the secondary transfer of the toner images transferred onto the intermediate transfer belt 20 to the recording material S conveyed by the sheet feeding portion 30. The secondary transfer roller 22 conveys, to the fuser 5, the recording material S on which the toner images have been subjected to the secondary transfer.

The sheet feeding portion 30 loads and accommodates the recording material S.

The sheet feeding roller 31 causes a leading end of the recording material S accommodated in the sheet feeding portion 30 to bounce up by friction of the sheet feeding roller 31.

The sheet separating conveying roller 32a and the sheet separating conveying roller 32b constitute a pair of sheet separating conveying rollers, and are provided to prevent double sheet feeding of the recording material S. The sheet separating conveying roller 32a and the sheet separating conveying roller 32b separate one sheet of the recording material S having the leading end caused to bounce up by the sheet feeding roller 31 and convey the sheet to the conveying roller 34a and the conveying roller 34b via the conveying path 33.

The conveying roller 34a and the conveying roller 34b constitute a pair of conveying rollers. The conveying roller 34a and the conveying roller 34b pull out the recording material S conveyed by the sheet separating conveying roller 32a and the sheet separating conveying roller 32b via the conveying path 33, and convey the recording material S to the registration roller 12a and the registration roller 12b via the conveying path 33.

The recording material S on which the toner image has been fused by the fuser 5 is discharged to the sheet discharge portion 35.

The toner containers 40Y, 40M, 40C, and 40K supply toner to the development unit 10 via a pipe (not illustrated) when the amount of toner in the development unit 10 decreases due to image formation.

The collected toner container 41 collects residual toner removed from the photoconductor drums 2Y, 2M, 2C, and 2K by drum cleaning devices 61Y, 61M, 61C, and 61K, which will be described below, of the image forming portions 50Y, 50M, 50C, and 50K. The collected toner container 41 collects residual toner removed from the intermediate transfer belt 20 by the belt cleaning device 60.

The image forming portions 50Y, 50M, 50C, and 50K form toner images based on image data of an original read by a reader. The image forming portion 50Y forms a yellow toner image. The image forming portion 50M forms a magenta toner image. The image forming portion 50C forms a cyan toner image. The image forming portion 50K forms a black toner image.

The image forming portions 50Y, 50M, 50C, and 50K include the photoconductor drums 2Y, 2M, 2C, and 2K, chargers 3Y, 3M, 3C, and 3K, and exposure units 4Y, 4M, 4C, and 4K. Also, the image forming portions 50Y, 50M, 50C, and 50K include development devices 11Y, 11M, 11C, and 11K, and the drum cleaning devices 61Y, 61M, 61C, and 61K.

The photoconductor drums 2Y, 2M, 2C, and 2K as image bearing members are arranged apart from each other. Each of the photoconductor drums 2Y, 2M, 2C, and 2K is rotatable.

The chargers 3Y, 3M, 3C, and 3K charge the photoconductor drums 2Y, 2M, 2C, and 2K.

The exposure units 4Y, 4M, 4C, and 4K include respective exposure heads 100 (not illustrated in FIG. 1) to be described below. The exposure units 4Y, 4M, 4C, and 4K irradiate the photoconductor drums 2Y, 2M, 2C, and 2K charged by the chargers 3Y, 3M, 3C, and 3K with light to expose the photoconductor drums 2Y, 2M, 2C, and 2K. The exposure units 4Y, 4M, 4C, and 4K form respective electrostatic latent images on the photoconductor drums 2Y, 2M, 2C, and 2K by exposing the photoconductor drums 2Y, 2M, 2C, and 2K.

The exposure units 4Y, 4M, 4C, and 4K expose the photoconductor drums 2Y, 2M, 2C, and 2K to light by a so-called "lower surface exposure method" of exposing the photoconductor drums 2Y, 2M, 2C, and 2K from below. A configuration of the exposure head 100 will be described below.

The development devices 11Y, 11M, 11C, and 11K develop, with toner, the electrostatic latent images formed on the photoconductor drums 2Y, 2M, 2C, and 2K by the exposure units 4Y, 4M, 4C, and 4K, and form toner images of the respective colors on the photoconductor drums 2Y, 2M, 2C, and 2K.

The drum cleaning devices 61Y, 61M, 61C, and 61K remove, from the photoconductor drums 2Y, 2M, 2C, and 2K, residual toner remaining on surfaces of the photoconductor drums 2Y, 2M, 2C, and 2K after the primary transfer.

The belt cleaning device 60 removes residual toner remaining on a surface of the intermediate transfer belt 20 after the secondary transfer.

### <Configuration of Exposure Head>

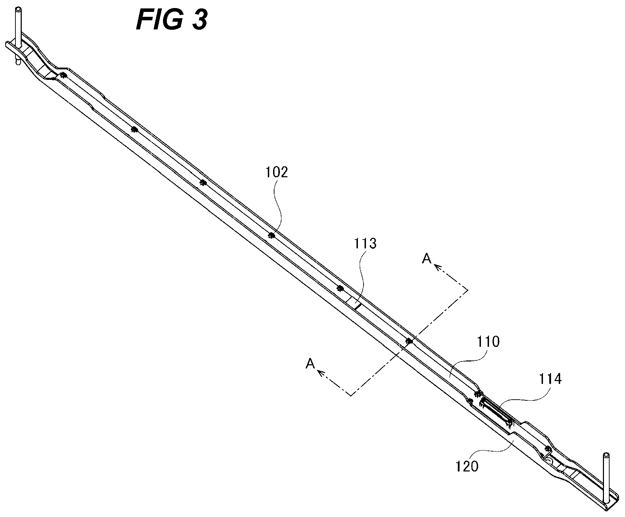

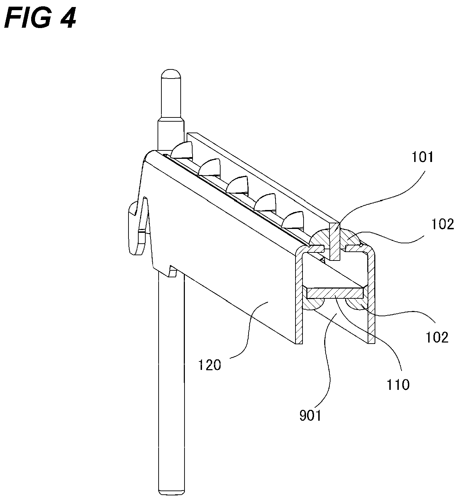

The configuration of the exposure head 100 according to Embodiment 1 of the invention will be described in detail with reference to FIGS. 1 to 7.

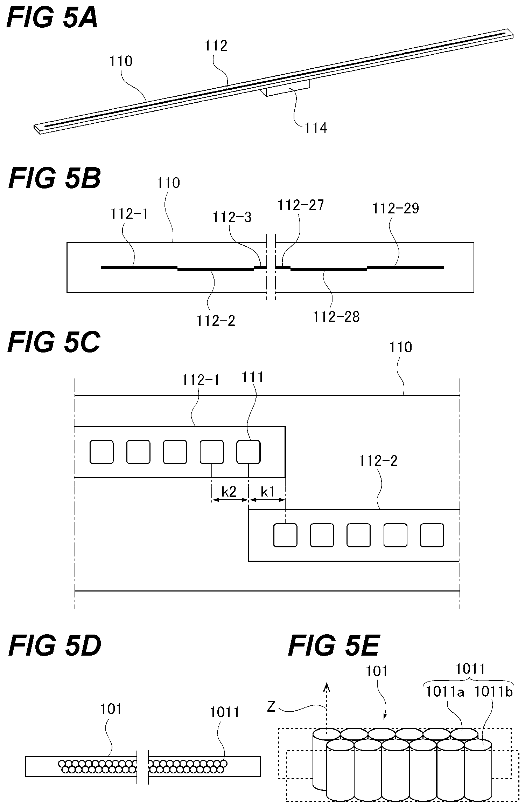

In FIGS. 5A to 5E, FIG. 5A is a perspective view of a substrate 110 on which an LED chip 112 and an FFC connector 114 are mounted, and FIG. 5B is a plan view of the substrate 110 on which the LED chip 112 is mounted. Also, FIG. 5C is an enlarged plan view of a part of the substrate 110 on which the LED chip 112 is mounted, FIG. 5D is a plan view of the lens array 101, and FIG. 5E is a schematic view of the lens array 101.

Here, a longitudinal direction of the exposure head 100 (a direction orthogonal to the paper surface in FIG. 1) (a main scanning direction) is defined as a front-rear direction, and a lateral direction (a left-right direction in FIG. 1) orthogonal to the longitudinal direction of the exposure head 100 is defined as a left-right direction. Since a longitudinal direction of the substrate 110, the longitudinal direction of the exposure head 100, and a longitudinal direction of the lens array 101 are the same direction, the longitudinal directions thereof are simply referred to as the "longitudinal direction" in the following description. Also, since a lateral direction of the substrate 110 and the lateral direction of the exposure head 100 are the same direction, the lateral directions thereof are simply referred to as the "lateral direction" in the following description.

Also, an example of an exposure method employed in the electrophotographic-system image forming apparatus 1 is a laser beam scanning exposure method in which scanning with an irradiation beam of a semiconductor laser is performed by a rotating polygon mirror or the like to expose a photoconductor drum via an f-θ lens or the like. On the other hand, the exposure head 100 is used in an LED exposure system in which the photoconductor drums 2Y, 2M, 2C, and 2K are exposed using light-emitting elements such as LEDs arranged along a rotational axis direction of the photoconductor drums 2Y, 2M, 2C, and 2K (a direction orthogonal to the paper surface in FIG. 1). The exposure head 100 is not used in the above-described laser beam scanning exposure method.

Also, as illustrated in FIG. 1, the exposure head 100 is provided below rotational axes of the photoconductor drums 2Y, 2M, 2C, and 2K in a vertical direction, and LEDs 111 provided in the exposure head 100 expose the photoconductor drums 2Y, 2M, 2C, and 2K from below.

Specifically, the exposure head 100 includes a lens array 101, an adhesive 102, the substrate 110, the LED chip 112, a driver IC 113, an FFC connector 114, and a holder 120.

As illustrated in FIGS. 5D and 5E, the lens array 101 includes lenses 1011 arranged along two rows in an arrangement direction of the LEDs 111. Radiation light emitted from the LED 111, which will be described below, of the LED chip 112 is incident on the lens 1011. The lens 1011 transmits the incident radiation light and condenses the light on the surfaces of the photoconductor drums 2Y, 2M, 2C, and 2K. A position of the lens array 101 is adjusted such that a distance between a light-emitting surface of the LED 111 and a light incident surface of the lens 1011 is substantially equal to a distance between a light-emitted surface of the lens 1011 and the surfaces of the photoconductor drums 2Y, 2M, 2C, and 2K. The lens array 101 is fixed at a plurality of positions in the longitudinal direction by the adhesive 102 in a state of being separated from the holder 120.

As illustrated in FIG. 5E, a lens 1011a in one row of the two rows is in contact with two lenses 1011b adjacent in an arrangement direction of the lenses 1011b in the other row of the two rows. The lens 1011 is a columnar rod lens made of glass. A material of the lens 1011 is not limited to glass, and may be plastic. Also, the shape of the lens 1011 is not limited to the columnar shape, and may be a polygonal columnar shape such as a hexagonal columnar shape.

The adhesive 102 fixes the substrate 110 and the lens array 101 to the holder 120 in a state in which the LED 111 and the lens 1011 face each other and in a state in which the substrate 110 and the lens array 101 are separated from the holder 120. The adhesive 102 fixes the substrate 110 and the holder 120 via cutout portions 116 at a plurality of locations and at the same right and left positions where the cutout portions 116 of the substrate 110 are provided, along the longitudinal direction. The adhesive 102 fixes the substrate 110 to the holder 120 in a range of a length shorter than a length of the cutout portion 116 in the longitudinal direction.

The substrate 110 includes the cutout portion 116 as a second facing portion. The cutout portion 116 is formed by being cut out inward from an end portion 110a as a first facing portion of the substrate 110 which faces a wall surface portion 901 of the holder 120 in the lateral direction, and faces the wall surface portion 901 in the lateral direction. The cutout portions 116 are provided at the plurality of locations and at the same right and left positions of the substrate 110 along the longitudinal direction. The cutout portion 116 is provided to have a width wider than a width of the adhesive 102 in the longitudinal direction, and is cut out by a dimension to the extent that the substrate 110 and the holder 120 are fixed with a sufficient amount of the adhesive 102 in the lateral direction. In the longitudinal direction of the substrate 110, a length of the end portion 110a is longer than the length of the cutout portion 116.

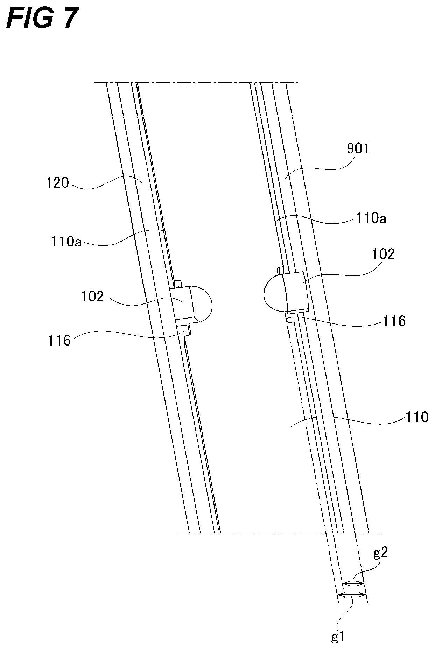

A length of a gap g1 as a second gap between the cutout portion 116 and the holder 120 in the lateral direction is longer than a length of a gap g2 as a first gap between the end portion 110a and the holder 120 in the lateral direction (see FIG. 7). The substrate 110 is fixed to the holder 120 via the cutout portion 116 with the adhesive 102 in a state in which the position of the substrate is adjusted while a curvature thereof in a thickness direction thereof is corrected and in a state in which the substrate is separated from the holder 120. The substrate 110 has a wiring (not illustrated) for supplying a signal to the LED chip 112.

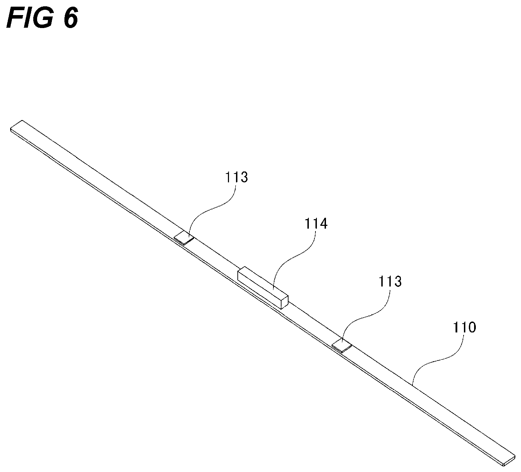

The LED chip 112 includes LEDs 111 as a plurality of light-emitting elements and is mounted on one surface of the substrate 110. In FIG. 6, the LED 111 is mounted on a surface of the substrate 110 opposite to the surface on which the FFC connector 114 is mounted. Also, in FIG. 6, the description of mounted components such as a resistor and a capacitor other than the FFC connector 114 and the IC chip 113 mounted on the substrate 110 is omitted.

The driver IC 113 is mounted on the other surface of the substrate 110 opposite to the one surface on which the LED chip 112 is mounted. The driver IC 113 is, for example, an IC chip having a size of 8×8 mm² and a thickness of 0.85 mm. A plurality of electrode pads (not illustrated) on a back surface of the driver IC 113 is electrically connected to electrodes (not illustrated) on the substrate 110 with solder. The driver IC 113 controls light emission of the LED 111. The driver IC 113 is an active element or a passive element that generates heat when performing control to cause the LED 111 to emit light.

The FFC connector 114 is mounted on the other surface of the substrate 110. One end of a cable such as a flexible flat cable (FFC) (not illustrated) is connected to the FFC connector 114. The FFC connector 114 is connected to the LED chip 112 via the wiring provided in the substrate 110 and supplies a signal input via a cable to the LED chip 112 via the wiring of the substrate 110.

The holder 120 is a metal thin plate having a thickness of about 1 mm and is formed by processing an electrogalvanized steel sheet in a press die. The holder 120 holds the lens array 101 and the substrate 110 via the adhesive 102.

In the above-described configuration, the other end of the cable connected to the FFC connector 114 is connected to a connector and a controller mounted on a substrate (which are all not illustrated) provided in the image forming apparatus 1. The LED chip 112 is driven by a control signal (drive signal) input from the controller and the connector of the image forming apparatus 1 via the cable, the FFC connector 114, and the wiring of the substrate 110.

Also, the exposure head 100 is movable in a direction substantially along an optical axis Z (see FIG. 5E) of the lens 1011 by a moving mechanism (not illustrated). Here, the optical axis Z of the lens 1011 means a line connecting the center of the light-emitted surface of the lens 1011 and a focal point of the lens 1011.

In the exposure head 100, the LED 111 is used as a light source, but the invention is not limited thereto, and organic electro luminescence (EL) may be used as the light source.

### <Configuration of LED Chip>

The configuration of the LED chip 112 of the exposure head 100 according to Embodiment 1 of the invention will be described in detail with reference to FIGS. 5A to 5E.

The LED chip 112 includes a plurality of LEDs 111, and a plurality of LED chips are arranged on one surface of the substrate 110. Here, 29 LED chips 112 are provided.

In each of the LED chips 112-1 to 112-29, 516 LEDs 111 mounted on the substrate 110 are arranged in a row along the longitudinal direction which is the rotational axis direction of the photoconductor drums 2Y, 2M, 2C, and 2K. A center-to-center distance k2 between the LEDs 111 adjacent in the arrangement direction of the LEDs 111 corresponds to the resolution of the image forming apparatus 1.

For example, in a case where the resolution of the image forming apparatus 1 is 1,200 dpi, the center-to-center distance k2 becomes 21.16 µm, and an exposure range of the exposure head 100 becomes about 314 mm. In this case, photosensitive layers of the photoconductor drums 2Y, 2M, 2C, and 2K are formed to have a width of 314 mm or more. Also, since a length of a long side of an A4-size recording material S and a length of a short side of an A3-size recording material S are 297 mm, the exposure head 100 has an exposure range in which an image can be formed on the A4-size recording material S and the A3-size recording material S.

The LED chips 112-1 to 112-29 are arranged in two rows along the rotational axis direction of the photoconductor drums 2Y, 2M, 2C, and 2K. Specifically, the odd-numbered LED chips 112-1, 112-3,..., and 112-29 counted from the left side are mounted on the substrate 110 in one row along the longitudinal direction. Also, the even-numbered LED chips 112-2, 112-4,..., and 112-28 counted from the left side are mounted on the substrate 110 in one row along the longitudinal direction.

The LED chips 112-2, 112-4,..., and 112-28 are arranged in a different row from the row of the LED chips 112-1, 112-3,..., and 112-29. A center-to-center distance k1 between the LED 111 at one end of the odd-numbered LED chips 112-1,..., and 112-29 in the arrangement direction and the LED 111 at the other end of the even-numbered LED chips 112-2,..., and 112-28 in the arrangement direction is the same as the center-to-center distance k2.

### <Operation of Image Forming Apparatus>

The operation of the image forming apparatus 1 according to Embodiment 1 of the invention will be described in detail with reference to FIG. 1.

The image forming apparatus 1 starts operation when image data is input from a reader, an external host computer (not illustrated), or the like.

First, the photoconductor drums 2Y, 2M, 2C, and 2K are charged by the chargers 3Y, 3M, 3C, and 3K.

Next, electrostatic latent images are formed on the photoconductor drums 2Y, 2M, 2C, and 2K by the exposure units 4Y, 4M, 4C, and 4K.

Next, the development devices 11Y, 11M, 11C, and 11K develop the electrostatic latent images on the photoconductor drums 2Y, 2M, 2C, and 2K, thereby forming toner images.

Next, the toner images formed on the photoconductor drums 2Y, 2M, 2C, and 2K are primarily transferred to the same position on the intermediate transfer belt 20 by the primary transfer roller 21.

Next, the toner images primarily transferred to the intermediate transfer belt 20 are conveyed to the secondary transfer portion T2 by the intermediate transfer belt 20.

Also, the recording material S loaded and accommodated in the sheet feeding portion 30 is fed to the conveying path 33 by the sheet feeding roller 31, the sheet separating conveying roller 32a, and the sheet separating conveying roller 32b at an image forming timing.

Next, the recording material S fed to the conveying path 33 is pulled out by the conveying roller 34a and the conveying roller 34b, and then is conveyed to the registration roller 12a and the registration roller 12b through the conveying path 33 and temporarily stopped.

Next, the recording material S temporarily stopped on the registration roller 12a and the registration roller 12b is subjected to the skew feeding correction and the timing correction, and then is conveyed to the secondary transfer portion T2 by the registration roller 12a and the registration roller 12b.

Next, when a transfer bias is applied to the secondary transfer roller 22, the toner images conveyed to the secondary transfer portion T2 are secondarily transferred to the recording material S conveyed from the registration roller 12a and the registration roller 12b in the secondary transfer portion T2.

Next, the recording material S on which the toner images have been secondarily transferred in the secondary transfer portion T2 is conveyed to the fuser 5 by the secondary transfer roller 22.

Next, in the fuser 5, fusing processing is performed on the recording material S conveyed to the fuser 5 such that heat and pressure are applied to the recording material, thereby fusing the toner images thereon.

Next, the recording material S on which the toner image is fused is discharged to the sheet discharge portion 35.

### <Countermeasures against Fluctuations in Light Quantity at Time of Temperature Rise of Exposure Head>

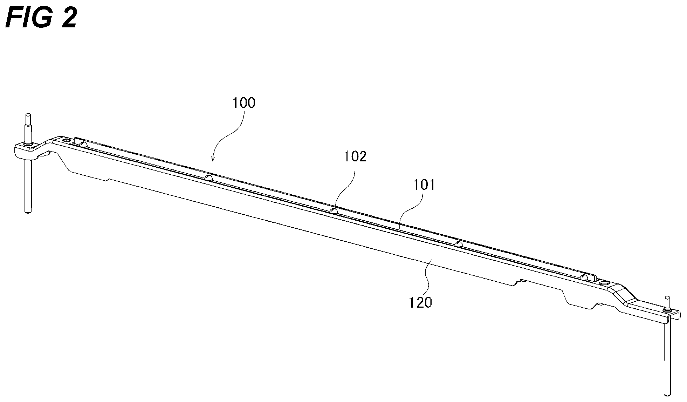

Countermeasures against fluctuations in light quantity at the time of a temperature rise of the exposure head 100 according to Embodiment 1 of the invention will be described in detail with reference to FIGS. 2 to 4 and FIGS. 7 to 9C.

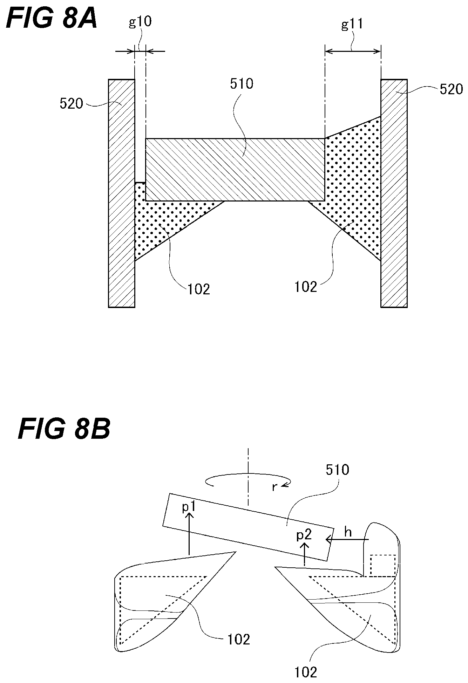

In FIGS. 8A and 8B, FIG. 8A is a schematic cross-sectional view of an exposure head in the related art, and FIG. 8B is a schematic view illustrating an effect observed at the time of the temperature rise of the exposure head in the related art.

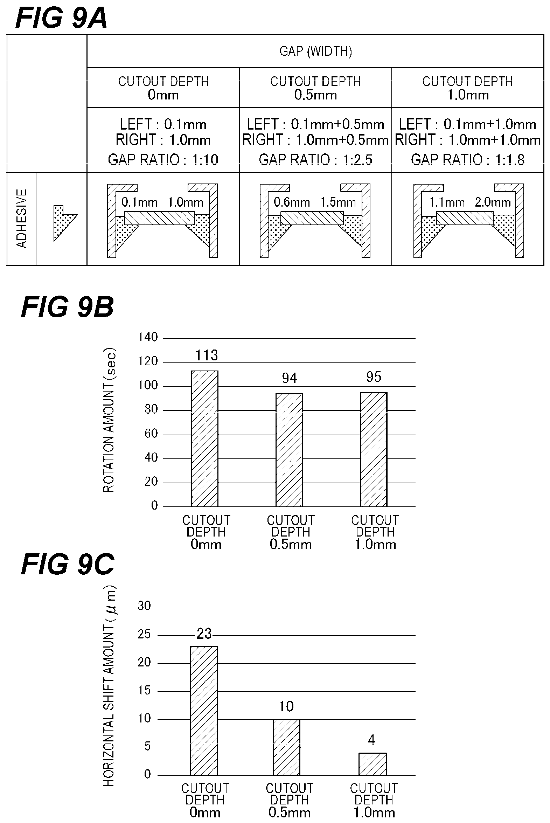

In FIGS. 9A to 9C, FIG. 9A illustrates simulation conditions, FIG. 9B illustrates a simulation result of a rotation amount of the substrate 110, and FIG. 9C illustrates a simulation result of a movement amount (horizontal shift amount) of the substrate 110 in a horizontal direction.

The holder 120 and the substrate 110 are adjusted so that the substrate 110 is positioned at a predetermined position with respect to the holder 120, and then the holder 120 and the substrate 110 are fixed by the adhesive 102 at the plurality of locations along the longitudinal direction.

During the image formation, a temperature of the driver IC 113 rises when the LED 111 is caused to emit light. Then, the heat generated in the heated driver IC 113 propagates to the substrate 110, the adhesive 102, and the holder 120. Here, in the exposure head of the related art, as illustrated in FIGS. 8A and **8B****, a holder** 520 and a substrate 510 are fixed with an adhesive 102 in a state in which a slight gap g10 is provided therebetween in the right-left direction. Therefore, in the exposure head of the related art, in a case where there is a difference in length between a gap g10 on the left side and a gap g11 on the right side between the substrate 510 and the holder 520 in the lateral direction, the adhesive 102 has a difference in shape and how thermal expansion occurs between the right and left sides.

As a result, in the exposure head of the related art, when the adhesive 102 having a difference in shape between the right and left sides has a temperature rise and thermally expands, a pressing amount of the adhesive 102 against the substrate 510 is different between the right and left sides.

For example, the substrate 510 of the exposure head in the related art is pressed in the vertical direction by the thermally expanded adhesive 102 with different pressing forces on the left and right sides, thereby moving by different movement amounts p1 and p2 (p1 > p2) in the vertical direction. Also, the substrate 510 of the exposure head in the related art is rotated by a rotation amount r by being pressed in a direction in which the substrate is rotated by the thermally expanded adhesive 102, and is moved by a movement amount h in the horizontal direction by being pressed in the horizontal direction from the right side. Consequently, in the exposure head of the related art, a posture of the substrate 510 changes in the vertical direction, the horizontal direction, and a rotating direction with respect to the holder 520, and relative positions of the substrate 510 and a lens array 101 vary in a depth direction of the image forming apparatus, thereby causing uneven light quantity.

On the other hand, in the exposure head 100 according to the present embodiment, the substrate 110 and the holder 120 are fixed with the adhesive 102 via the cutout portion 116 of the substrate 110. Consequently, the lengths of the right and left gaps g1 of a portion between the substrate 110 and the holder 120 fixed with the adhesive 102 can be relatively increased, and a gap ratio which is a ratio of the lengths of the left gap g1 and the right gap g1 can be reduced. Also, by providing the cutout portion 116 on the substrate 110 side, a difference in length between the left and right gaps g1 can be reduced without increasing a width of the exposure head 100, and thus this is particularly useful in a case where there is a small space around the exposure head 100.

Also, the substrate 110 is fixed to the holder 120 by the adhesive 102 in a range of a length shorter than the length of the cutout portion 116 in the longitudinal direction. Consequently, since the adhesive 102 can be provided only in the cutout portion 116 of the substrate 110, the movement of the substrate 110 due to the temperature rise can be reliably reduced, and the fluctuations in the optical output due to the temperature rise can be reliably reduced.

Subsequently, simulation results of a rotation amount and a horizontal movement amount (shift amount) of the substrate 110 at the time of the temperature rise in a case where a cutout depth of the cutout portion 116 in the lateral direction is changed will be described in detail with reference to FIGS. 9A to 9C.

FIGS. 9A to 9C illustrates a case where the lengths of the left and right gaps g1 between the substrate 110 and the holder 120 are set to 0.1 mm and 1.0 mm, respectively, and the cutout depth of the cutout portion 116 in the lateral direction is changed between 0 mm, 0.5 mm, and 1.0 mm. Also, the gap ratio is a ratio of the length of the right gap g1 to the length of the left gap g1 in a case where the length of the left gap g1 is "1". In the case where the cutout depth is 1.0 mm, as illustrated in FIG. 9A, a distance between the holder 120 and the substrate 110 in the cutout portion 116 is 1.1 to 2.0 mm in the lateral direction.

As illustrated in FIGS. 9A to 9C, the gap ratio in the case where the cutout portion 116 having a cutout depth of 1 mm is provided on the left and right of the substrate 110 is smaller than the gap ratio in a case where the cutout portion 116 is not provided. Consequently, the rotation amount of the substrate 110 at the time of the temperature rise was reduced by about 16% as illustrated in FIG. 9B, and the horizontal movement amount thereof was reduced by about 83% as illustrated in FIG. 9C. Hence, it can be found that, in a case where the cutout portion 116 having a cutout depth of 1 mm is provided on the left and right of the substrate 110, the change in the relative position of the substrate 110 is reduced as compared with a case where the cutout portion 116 is not provided.

In the present embodiment, the substrate 110 has the end portion 110a facing the holder 120 with the gap g2 in the lateral direction and the cutout portion 116 facing the holder 120 with the gap g1 larger than the gap g2 in the lateral direction. Also, the adhesive 102 fixing the substrate 110 and the holder 120 via the cutout portion 116 is provided. Consequently, the fluctuations in the optical output due to the temperature rise can be reduced with a simple configuration.

### (Embodiment 2)

Since a configuration of an image forming apparatus according to Embodiment 2 of the invention is the same as that of FIG. 1, the description thereof will be omitted.

### <Configuration of Exposure Head>

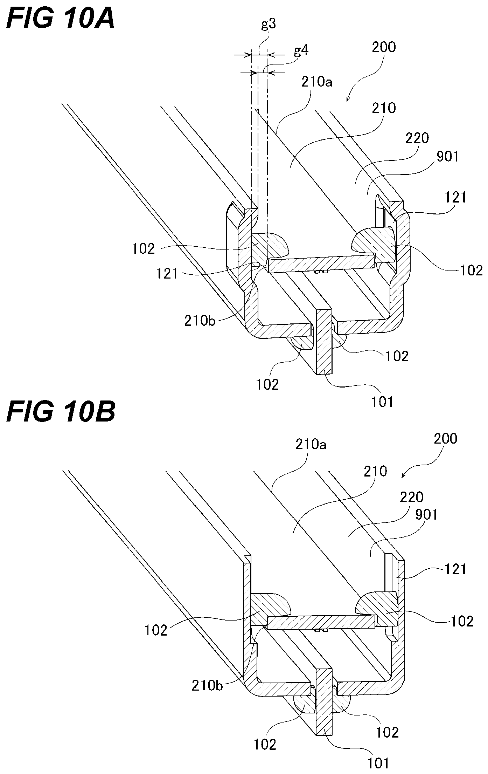

A configuration of an exposure head 200 according to Embodiment 2 of the invention will be described in detail with reference to FIG. 10.

In FIGS. 10A and 10B, FIG. 10A is a cross-sectional perspective view of the exposure head 200 according to the present embodiment, and FIG. 10B is a cross-sectional perspective view of another configuration of the exposure head 200 according to the present embodiment.

In FIGS. 10A and 10B, parts having the same configurations as those in FIGS. 2 to 7 are denoted by the same reference numerals, and the description thereof is omitted.

The exposure head 200 includes a lens array 101, an adhesive 102, an LED chip 112, a driver IC 113, an FFC connector 114, a substrate 210, and a holder 220.

The lens array 101 is fixed at a plurality of positions in a longitudinal direction by the adhesive 102 in a state of being separated from the holder 220.

The adhesive 102 fixes the lens array 101 and the substrate 210 to the holder 220 in a state in which the lens array 101 and the substrate 210 are separated from the holder 220. The adhesive 102 fixes the substrate 210 and the holder 220 via recess portions 121 at a plurality of locations and at the same right and left positions where the recess portions 121 of the holder 220 are provided, along the longitudinal direction. The adhesive 102 fixes the substrate 210 to the holder 220 in a range of a length shorter than a length of the recess portion 121 in the longitudinal direction.

The holder 220 is a metal thin plate having a thickness of about 1 mm and is formed by processing an electrogalvanized steel sheet in a press die. The holder 220 has the recess portion 121 recessed in a recessed shape in a wall surface portion 901 facing the substrate 210. The holder 220 fixes and holds the lens array 101 via the adhesive 102 and fixes and holds the substrate 210 via the adhesive 102 in the recess portion 121.

The recess portions 121 are provided at the plurality of locations and at the same right and left positions of the holder 220 along the longitudinal direction. The recess portion 121 may be formed by plastically deforming a sheet metal by performing drawing or the like to be recessed as illustrated in FIG. 10A, may be formed by cutting the sheet metal in a case where the sheet metal has a sufficient thickness as illustrated in FIG. 10B, or may be formed by die casting.

The substrate 210 has an end portion 210a as a first facing portion facing the wall surface portion 901 of the holder 220 in the lateral direction, and an end portion 210b as a second facing portion facing the recess portion 121 in the lateral direction. A length of a gap g3 as a second gap between the end portion 210b and the holder 220 in the lateral direction is longer than a length of a gap g4 as a first gap between the end portion 210a and the holder 220 in the lateral direction (see FIG. 10A). The substrate 210 is fixed to the holder 220 with the adhesive 102 in a state in which the position of the substrate is adjusted while a curvature thereof in a thickness direction thereof is corrected and in a state in which the substrate is separated from the holder 220. The substrate 210 has a wiring (not illustrated) for supplying a signal to the LED chip 112.

The LED chip 112 includes a plurality of LEDs 111 and is mounted on one surface of the substrate 210.

The driver IC 113 is mounted on the other surface of the substrate 210 opposite to the one surface on which the LED chip 112 is mounted. A plurality of electrode pads (not illustrated) on a back surface of the driver IC 113 is electrically connected to electrodes (not illustrated) on the substrate 210 with solder.

The FFC connector 114 is mounted on the other surface of the substrate 210. The FFC connector 114 is mounted on the substrate 210. The FFC connector 114 is connected to the LED chip 112 via the wiring provided in the substrate 210 and supplies a signal input via a cable to the LED chip 112 via the wiring.

In the above-described configuration, the LED chip 112 is driven by a control signal (drive signal) input from the controller and the connector of the image forming apparatus 1 via the cable, the FFC connector 114, and the wiring of the substrate 210.

Also, the exposure head 200 is movable in a direction substantially along an optical axis Z (see FIG. 5E) of the lens 1011 by a moving mechanism (not illustrated).

In the exposure head 200, the LED 111 is used as an exposure light source, but the invention is not limited thereto, and organic electro luminescence (EL) may be used as the exposure light source.

In the exposure head 200 according to the present embodiment, the substrate 210 and the holder 220 are fixed with the adhesive 102 via the recess portion 121 of the holder 220. Consequently, the lengths of the gaps of a portion between the substrate 210 and the holder 220 fixed with the adhesive 102 can be relatively increased, and a gap ratio which is a ratio of the lengths of the left gap and the right gap in the lateral direction can be reduced. Also, by providing the recess portion 121 on the holder 220 side, a difference in length between the left and right gaps in the lateral direction can be reduced without increasing a width of the exposure head 200, and thus this is particularly useful in a case where there is a small space around the exposure head 200.

Since operation of the image forming apparatus according to present embodiment and the operation of the image forming apparatus 1 are the same operation, the description thereof will be omitted.

According to the present embodiment, by providing the recess portion 121 in the holder 220, there is no need to provide the cutout portion 116 in the substrate 210. Hence, the degree of freedom in designing the substrate 210 can be enhanced in addition to the effects of the above-described Embodiment 1.

It is needless to say that the invention is not limited to the above-described embodiments and can be variously modified without departing from the gist of the invention.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An exposure head (100) configured to expose a rotating image bearing member (2Y,2M,2C,2K), the exposure head comprising:
a holder (120);
a substrate (110) on which a plurality of light-emitting elements (111) is mounted along a rotational axis direction of the image bearing member (2Y,2M,2C,2K);
a lens array (101) including a plurality of lenses (1011) configured to transmit light emitted from the plurality of light-emitting elements (111) and condense the light on the image bearing member (2Y,2M,2C,2K); and
an adhesive (102) fixing the substrate (110) and the lens array (101) to the holder (120) in a state in which the plurality of light-emitting elements (111) and the lenses face each other and in a state in which the substrate (110) and the holder (120) are separated from each other, wherein
the substrate (110) includes a first facing portion (110a) facing the holder (120) with a first gap (g2) therebetween in a lateral direction of the substrate (110), and a second facing portion (116) facing the holder (120) with a second gap (g1) therebetween which is larger than the first gap (g2) in the lateral direction, and
the adhesive (102) fixes the substrate (110) and the holder (120) via the second facing portion (116).

2. The exposure head according to claim 1, wherein the second facing portion is a cutout portion obtained by cutting out the substrate in the lateral direction.

3. The exposure head according to claim 1, wherein
the holder has a recess portion recessed in the lateral direction, and
the second facing portion faces the recess portion in the lateral direction.

4. The exposure head according to claim 1, wherein the adhesive fixes the substrate to the holder in a range of length shorter than a length of the second facing portion in a longitudinal direction of the substrate.

5. The exposure head according to claim 1, wherein a length of the first facing portion is longer than a length of the second facing portion in a longitudinal direction of the substrate.

6. The exposure head according to claim 1, wherein a distance between the holder and the substrate in the second facing portion is 1.1 to 2.0 mm in the lateral direction.

7. An image forming apparatus comprising:
an image bearing member;
a charger configured to charge the image bearing member;
the exposure head according to claim 1 configured to expose the image bearing member charged by the charger and form an electrostatic latent image on the image bearing member; and
a development device configured to develop the electrostatic latent image with toner and form a toner image on the image bearing member.
